(19) Europäisches Patentamt
European Patent Office
Office européen des brevets

(11) Numéro de publication : **0 154 574 B1**

(12) **FASCICULE DE BREVET EUROPÉEN**

(45) Date de publication du fascicule du brevet :
11.01.89

(51) Int. Cl.⁴ : **F 16 B 21/16, B 64 G 1/64**

(21) Numéro de dépôt : 85400166.6

(22) Date de dépôt : 01.02.85

(54) **Dispositif pyrotechnique de verrouillage, d'assemblage et d'isolement.**

(30) Priorité : 14.02.84 FR 8402203

(43) Date de publication de la demande :
11.09.85 Bulletin 85/37

(45) Mention de la délivrance du brevet :
11.01.89 Bulletin 89/02

(84) Etats contractants désignés :
BE DE FR GB IT LU NL

(56) Documents cités :
WO--A--82 /014 88
BE--A-- 542 698
FR--A-- 1 134 370
GB--A-- 570 911
GB--A-- 1 468 370
US--A-- 2 779 279

(73) Titulaire : **CENTRE NATIONAL D'ETUDES SPATIALES**
**2, Place Maurice Quentin**
**F-75001 Paris (FR)**

(72) Inventeur : **Bouloumie, Jean-Pierre Emile Alain**
**Saint Pierre-de-Lages**
**F-31570 Lanta (FR)**
Inventeur : **Danjean, Gérard Georges Emile**
**23, Lotissement des Bleuets Baziege**
**F-31450 Montgiscard (FR)**
Inventeur : **Lebaillif, André Lucien Marie**
**21, Rue des Mésanges**
**F-31240 L'Union (FR)**

(74) Mandataire : **de Boisse, Louis Arnaud et al**
**CABINET de BOISSE 37, Avenue Franklin D. Roose-**
**velt**
**F-75008 Paris (FR)**

## Description

L'invention concerne un dispositif pyrotechnique de verrouillage, d'assemblage et d'isolement irréversible destiné à l'assemblage de structures métalliques, ledit dispositif comportant un tube pyrotechnique à expansion.

Les dispositifs utilisant des tubes pyrotechniques à expansion sont généralement développés pour répondre aux besoins de l'industrie aérospatiale dans des fonctions de séparation. On citera par exemple la séparation des étages de lanceurs, la séparation de charges utiles, le dégerbage de générateurs solaires de satellites, l'éjection de verrières ou de panneaux d'évacuation sur les avions, etc.

Les tubes pyrotechniques à expansion sont généralement utilisés pour cisailler un élément de structure au niveau d'une section de rupture située dans le plan de séparation. Le dispositif se présente sous forme d'un ensemble intermédiaire comportant un logement, recevant le tube pyrotechnique, et une rainure usinée dans la paroi extérieure du logement définissant une section de rupture de moindre résistance. Un exemple d'un tel dispositif est montré dans le brevet des E. U.A. 3 698 281. Le tube à expansion est enserré dans un logement défini entre les deux faces en regard d'une bride fixée entre les deux ensembles à séparer. Les faces extérieures comportent, approximativement dans la partie médiane correspondant au logement, des rainures qui forment dans les parois du logement des lignes de moindre résistance selon lesquelles se concentreront les forces engendrées par l'expansion du tube pyrotechnique provoquant la rupture des parois du logement et la séparation des éléments situés de part et d'autre des rainures.

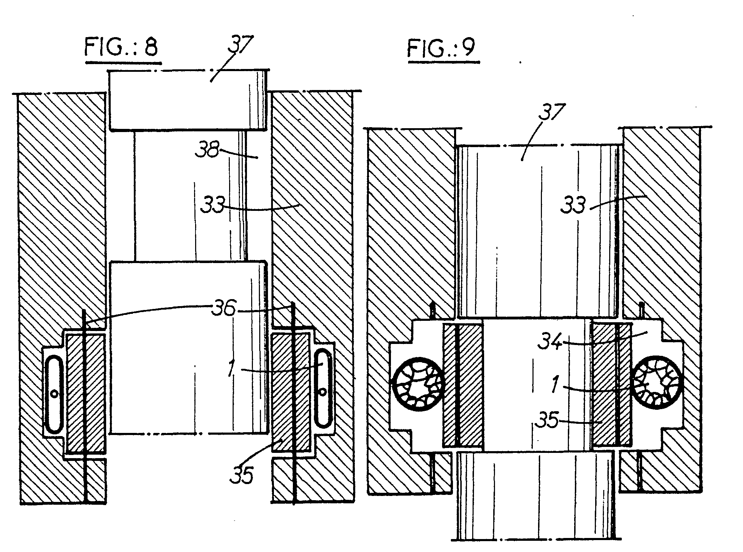

L'utilisation de dispositifs pyrotechniques pour des fonctions de verrouillage est connu du brevet GB-A-1.468.370 (voir en particulier Fig. 9 et 10) pour la liaison d'éléments cylindriques coaxiaux et de diamètres sensiblement identiques, formant une partie mâle et une partie femelle. Une des parties d'assemblage présente un logement annulaire pour une charge explosive gainée dans un matériau plastique. Le verrouillage se fait, lors de la mise à feu de la charge par déformation d'une partie d'un des éléments ou d'un manchon intermédiaire intégré en fabrication. Dans tous les cas, l'élément pyrotechnique est spécifique à chaque utilisation.

L'invention a pour but de fournir un dispositif permettant l'assemblage irréversible étanche ou non, d'éléments dont la liaison mécanique doit être assurée de manière automatique et rapide avec ou sans intervention humaine, dans des conditions d'environnement sévères.

Le dispositif d'assemblage comporte un tube pyrotechnique à expansion agissant sur des moyens d'assemblage appartenant à deux éléments ou structures à solidariser.

Les explications et figures, données ci-après à titre d'exemples, permettront de comprendre comment l'invention peut être réalisée.

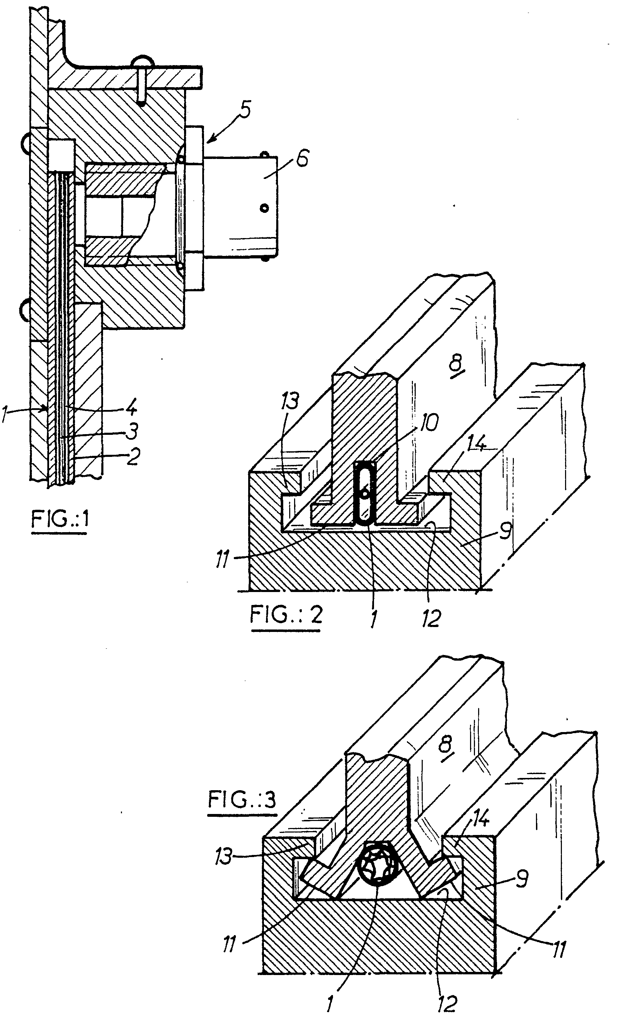

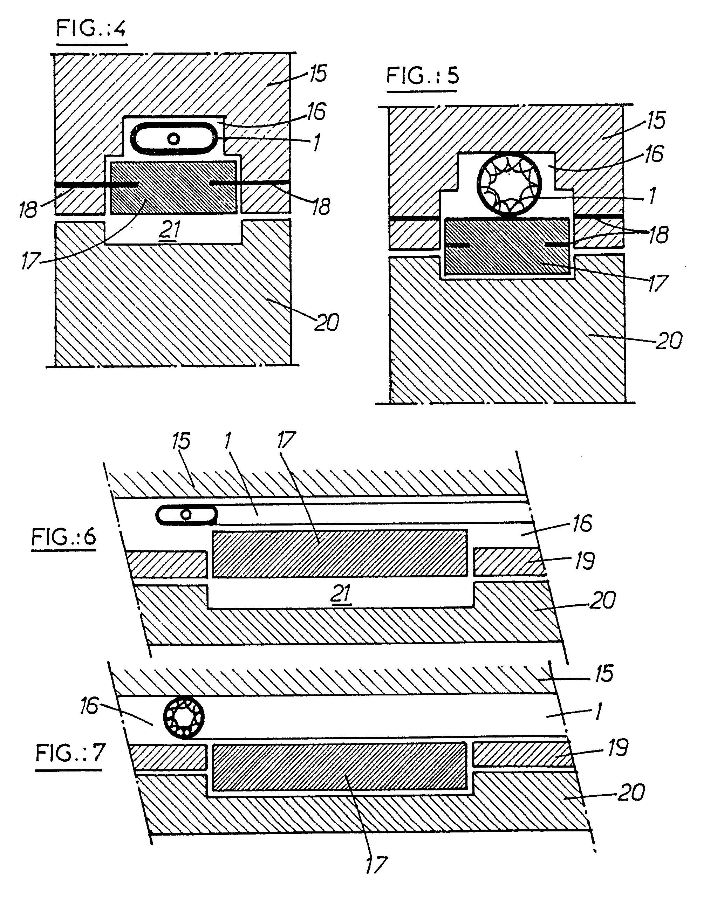

La figure 1 est une vue en coupe partielle d'un tube pyrotechnique à expansion et de son système d'allumage ; les figures 2 et 3 montrent un premier exemple de réalisation d'un dispositif de verrouillage selon l'invention ; les figures 4 et 6 représentent une coupe transversale d'un deuxième exemple de réalisation d'un dispositif de verrouillage avant verrouillage ; les figures 5 et 7 représentent le dispositif de verrouillage selon les figures 4 et 6 en position verrouillée ; les figures 8 et 9 représentent un dispositif de verrouillage, pour des éléments tubulaires, d'un type semblable à celui des figures 4 et 5.

Le dispositif de verrouillage pyrotechnique irréversible entre deux éléments à assembler comporte une partie d'assemblage prévue sur chacun des éléments et un tube pyrotechnique à expansion. Le tube pyrotechnique est logé dans une des parties d'assemblage et assure directement ou indirectement, après expansion, la solidarisation des parties coopérantes des deux éléments à assembler.

Un tube pyrotechnique à expansion 1 (figure 1) est constitué, comme connu, d'un tube métallique 2, de section annulaire aplatie, susceptible de reprendre après expansion sa section circulaire d'origine. Un tube de section circulaire reçoit selon son axe un cordon détonant 3. L'espace séparant le cordon détonant du tube est rempli d'un matériau amortisseur et d'un matériau assurant le transfert de l'énergie 4. Les extrémités du tube sont scellées puis le tube est aplati. Le tube est muni à au moins une de ses extrémités d'un bloc d'allumage 5 dans lequel vient se fixer le détonateur 6.

Afin d'éviter les ratés, dus généralement à une lacune dans le remplissage du cordon détonant, on prévoit un dispositif d'allumage à chaque extrémité. Dans des éléments à assembler de grandes dimensions, il sera souhaitable de prévoir des dispositifs d'allumage en plusieurs points du tube pyrotechnique.

Selon un premier exemple de réalisation (figures 2, 3), les éléments à assembler portent des parties d'assemblage 8, 9 susceptibles de coopérer. Une des parties d'assemblage 8 comporte une rainure 10 dans laquelle se loge le tube pyrotechnique 1. La rainure 10 s'étend sur toute la longueur de la face d'extrémité 11 coopérant au moins pendant la phase de positionnement de l'assemblage avec la face 12 de la partie d'assemblage 9 de l'autre élément.

La partie d'assemblage prévue sur l'élément 8 est constituée d'une partie mâle métallique présentant une section en T. La rainure 10 dans laquelle est logé le tube pyrotechnique est formée à l'extrémité de l'élément mâle dans le plan bissecteur de la branche transversale du T. La largeur de la rainure est égale à l'épaisseur du tube pyrotechnique.

La partie femelle d'assemblage présente une forme approximativement conjuguée de la partie mâle, la distance séparant les rebords 13 et 14 de la partie femelle permettant le passage avec jeu de la branche transversale de la partie mâle. La partie femelle constitue une rainure de guidage pour la partie mâle et pour l'élément à assembler. Lorsque l'assemblage définitif est décidé, le tube pyrotechnique est allumé et, sous l'action des gaz d'explosion, il prend sa section circulaire d'origine (figure 3), en écartant les deux ailes formées de part et d'autre de la rainure 10 séparant la branche transversale de la partie mâle. Ces deux ailes viennent se bloquer entre le fond 12 et les rebords 13, 14 de la partie femelle.

Selon une forme de réalisation non représentée mais semblable à celle précédemment décrite, les parties mâle et femelle correspondantes ont une section trapézoïdale, la grande base du trapèze formant l'extrémité de la partie mâle, dans laquelle est prévue la rainure pour loger le tube pyrotechnique. La partie femelle, prévue dans la partie d'assemblage de l'autre élément, a une forme conjuguée de la partie mâle et son ouverture permet le passage avec jeu de l'extrémité de la partie mâle. La mise à feu du tube pyrotechnique produit l'écartement de l'extrémité et le blocage contre les bords de la partie femelle.

Selon une disposition particulière les formes trapézoïdales de la partie mâle et femelle ne sont pas conjuguées mais la pente des faces de la partie mâle est supérieure à celle des faces de la partie femelle de manière que lors de l'expansion du tube pyrotechnique, les faces viennent en contact sur une surface importante.

Selon la forme de réalisation représentée sur les figures 4 à 7, plus particulièrement destinée à verrouiller deux éléments pour empêcher un mouvement relatif transversal, l'extrémité d'un des éléments 15 porte une rainure 16 pour loger le tube pyrotechnique 1 selon sa plus grande largeur. Des éléments de verrouillage 17 sont maintenus par des goupilles de cisaillement 18 devant le tube pyrotechnique et affleurent la face d'extrémité. Les espaces compris entre les éléments de verrouillage 17 sont fermés par des pièces d'obturation 19 soudées ou collées dans la rainure et laissant par rapport au fond de la gorge un espace dont la profondeur correspond au diamètre du tube pyrotechnique expansé.

La partie d'assemblage 20 de l'autre élément à assembler présente, face aux éléments de verrouillage, des logements 21 dans lesquels ils peuvent s'encastrer partiellement.

Lors de l'expansion du tube pyrotechnique (figures 5, 7) les éléments de verrouillage sont repoussés ce qui détermine la rupture des goupilles de cisaillement et l'encastrement desdits éléments dans les logements prévus dans l'autre élément.

Selon la forme de réalisation représentée figures 8 et 9, les parties d'éléments à assembler sont concentriques. L'une des parties est tubulaire et reçoit l'autre partie tubulaire ou pleine.

La partie tubulaire extérieure 33 porte sur sa surface intérieure une rainure 34 dans laquelle se loge le tube pyrotechnique 1. Des éléments de verrouillage 35 formés par des segments annulaires sont maintenus dans un logement prévu devant la rainure portant le tube par des goupilles de cisaillement 36. Eventuellement, les espaces séparant les segments annulaires sont fermés par des pièces d'obturation. La partie d'élément intérieur 37 porte sur sa surface extérieure une rainure 38 de largeur correspondante à la hauteur des éléments de verrouillage 35 et de profondeur inférieure à l'épaisseur desdits éléments 35. Après expansion du tube 1 (figure 9) les éléments de verrouillage pénètrent partiellement dans la rainure 38 de la partie d'élément 37.

Cette réalisation est semblable à celle des figures 4 à 7 mais pour des éléments cylindriques.

Les tubes pyrotechniques forment une fois expansés dans des rainures correspondantes un joint d'étanchéité permettant l'isolement rapide des ambiances situées de part et d'autre, par exemple, d'une porte, d'un tampon, ou de tout autre moyen séparant deux locaux.

Le dispositif selon l'invention assure un verrouillage irréversible, de mise en oeuvre rapide, ne présentant pas de danger de manipulation. Il permet d'obtenir un verrouillage linéaire au niveau d'assemblages droits ou curvilignes sans pollution mécanique ou chimique. Il ne nécessite qu'une énergie d'activation de faible niveau pour la mise à feu du tube pyrotechnique et peut supporter des conditions d'environnement mécanique ou/et climatiques très sévères.

Les domaines d'utilisation de ces dispositifs sont nombreux, quelques exemples sont cités ci-après :
- dans les systèmes spatiaux :
- assemblage de grandes structures dans l'espace ;
- liaison vaisseau-station orbitale (connectique, arrimage, etc.) ;
- verrouillage de divergents ;
- déployables sur les tuyères de propulseurs ;
- dans les systèmes de sécurité :
- verrouillage de système de sécurité dans les industries nucléaire et pétrolière ;
- protection d'enceintes à hauts risques par isolement de zones de travail ;
- aéronautique ;
- dans les systèmes de connection et d'étanchéité nécessitant une mise en oeuvre rapide en de multiples points.

**Revendications**

1. Dispositif pyrotechnique de verrouillage, d'assemblage et d'isolement entre deux éléments à assembler, chacun des éléments comportant des parties d'assemblage susceptibles de coopérer, au moins une des parties d'assemblage comportant un logement pour un tube pyrotechnique à expansion, ledit tube provoquant, lors de sa mise à feu, le verrouillage des parties d'assemblage, les parties d'assemblage étant formées par une partie mâle et une partie femelle, la partie mâle (11) entrant, avant la mise à feu dudit tube, avec jeu dans la partie femelle (12) et portant à son extrémité une rainure (10) pour loger le tube à expansion susceptible de provoquer, lors de sa mise à feu, l'écartement de ladite extrémité.

2. Dispositif selon la revendication 1, caractérisé en ce que la partie mâle est plus large à son extrémité et en ce que la partie femelle a une forme conjuguée de la partie mâle.

3. Dispositif selon la revendication 2, caractérisé en ce que les parties mâle et femelle correspondantes ont une forme en T, la rainure (10) pour loger le tube à expansion étant prévue au milieu de la branche transversale (11) du T.

4. Dispositif selon la revendication 2, caractérisé en ce que les parties mâle et femelle correspondantes ont une section trapézoïdale, la grande base du trapèze formant l'extrémité de la partie mâle et étant susceptible de coopérer avec la partie femelle de forme approximativement conjuguée, la grande base portant la rainure pour loger le tube à expansion.

5. Dispositif pyrotechnique de verrouillage, d'assemblage et d'isolement entre deux éléments à assembler, chacun des éléments comportant des parties d'assemblage susceptibles de coopérer, une des parties d'assemblage de l'un des éléments comportant une rainure pour un tube pyrotechnique à expansion et pour au moins un élément de verrouillage, un logement de verrouillage étant prévu dans une face contiguë de l'autre partie d'assemblage de l'autre élément, ledit élément de verrouillage (17, 35) étant maintenu dans l'ouverture de la rainure par des goupilles de cisaillement (18, 36) en face dudit logement (21, 38) prévu dans la partie d'assemblage de l'autre élément (20, 37), l'expansion du tube pyrotechnique provoquant la rupture des goupilles et la pénétration partielle de l'élément de verrouillage dans ledit logement.

6. Dispositif selon la revendication 5, caractérisé en ce qu'il comporte plusieurs éléments de verrouillage, des éléments d'obturation (19) étant fixés entre lesdits éléments de verrouillage.

7. Dispositif selon la revendication 6, caractérisé en ce que les éléments de verrouillage sont des segments annulaires.

## Claims

1. Pyrotechnic device for locking assembly and isolation of two elements to be assembled, the two elements each comprising cooperative assembly parts, at least one of said assembling part having a recess for accommodating a pyrotechnic expansion tube, said tube causing when fired, the locking of the assembly parts, said assembly parts consisting of a male part and a female part, the male part (11) entering, before the tube firing, with play, the female part (12) and having, at its end, a groove (10) for accommodating the pyrotechnic expansion tube which is able to cause, when fired, said end to be expanded.

2. Device as claimed in claim 1, characterized in that the male part is wider at its end and wherein the female part gas a shape matching that of the male part.

3. Device as claimed in claim 2, characterized in that the corresponding male and female parts have a T shape, the groove (10) for accommodating the expansion tube being provided in the middle of the transverse arm of the T.

4. Device as claimed in claim 2, characterized in that the corresponding male and female parts have a trapezoidal crosssection, the large base of the trapezoid forming the end of the male part and being able to cooperate with the female part which has an approximately matching shape, the large base having the groove for accommodating the expansion tube.

5. Pyrotechnic device for locking, assembly and isolation of two elements to be assembled, the two elements each comprising cooperative assembly parts, one of the assembly parts of one of the elements being provided with the groove for a pyrotechnic expansion tube, and for at least one locking element, a locking recess being provided in an adjoining face of an assembly part of the other element, said locking element (17, 35) being held in the opening of the groove by shearing pins (18, 36) opposite said recess (21, 38) provided in the assembly part of the other element (20, 37) expansion of the pyrotechnic tube causing the pins to break and the locking element to penetrate partially into the recess.

6. Device as claimed in claim 5, characterized in that several locking elements are provided, sealing elements (19) being fixed between the locking elements.

7. Device as claimed in claim 6, characterized in that the locking elements are annular segments.

## Patentansprüche

1. Pyrotechnische Einrichtung zur Verbindung, Fixierung und Isolierung zweier zusammenzubauender Elemente, die jeweils zusammenwirkende Montageteile aufweisen, von denen zumindest einer eine Aufnahme für ein pyrotechnisches Expansionsrohr hat und die von einem vorspringenden sowie einem einspringenden Teil gebildet sind, dadurch gekennzeichnet, daß der vorspringende Teil (11) vor dem Zünden des Rohrs mit Spiel in den einspringenden Teil (12) geht und an seinem Ende eine Nut (10) trägt, um das Expansionsrohr derart aufzunehmen, daß von ihm bei seiner Zündung die Spreizung des Endes bewirkbar ist.

2. Einrichtung nach Anspruch 1, dadurch gekennzeichnet, daß der vorspringende Teil an seinem Ende erweitert ist und daß der einspringende Teil eine zum vorspringenden Teil entsprechende Gegenform hat.

3. Einrichtung nach Anspruch 2, dadurch gekennzeichnet, daß die einander entsprechenden vor- und einspringenden Teile jeweils T-Form haben, wobei die Nut (10) zur Aufnahme des Expansionsrohrs in der Mitte des T-Quersteges (11) vorgesehen ist.

4. Einrichtung nach Anspruch 2, dadurch gekennzeichnet, daß die einander entsprechenden Teile jeweils Trapezquerschnitt haben, wobei die Trapezgrundfläche das Ende des vorspringenden Teils bildet und zum Zusammenwirken mit dem ungefähr gegengleich gestalteten einspringenden Teil geeignet ist und in der Grundfläche die Nut zur Aufnahme des Expansionsrohrs aufweist.

5. Pyrotechnische Einrichtung zur Verbindung, Fixierung und Isolierung zweier zusammenzubauender Elemente, die jeweils zusammenwirkende Montageteile aufweisen, von denen der eine Montageteil des einen Elements eine Nut für ein pyrotechnisches Expansionsrohr sowie für wenigstens ein Befestigungslement hat, wobei ein Befestigungssitz in einer unmittelbar benachbarten Fläche des anderen Montageteils vorgesehen ist, dadurch gekennzeichnet, daß das Befestigungslement (17, 35) in der Nut-Öffnung durch Scherstifte (18, 36) gehalten ist, die dem im Montageteil des anderen Elements (20, 37) vorhandenen Sitz (21, 38) gegenüberliegen, so daß die Ausdehnung des pyrotechnischen Rohrs das Abreißen der Scherstifte sowie das teilweise Eindringen des Befestigungselements in den Sitz bewirkt.

6. Einrichtung nach Anspruch 5, dadurch gekennzeichnet, daß sie eine Anzahl von Befestigungslementen aufweist, zwischen denen Abdichtelemente (19) fixiert sind.

7. Einrichtung nach Anspruch 6, dadurch gekennzeichnet, daß die Befestigungselemente Ringsegmente sind.

FIG.:1

FIG.: 2

FIG.:3

FIG.:4

FIG.:5

FIG.:6

FIG.:7

FIG.: 8

FIG.: 9